# EUROPÄISCHE PATENTSCHRIFT

(11) **EP 3 312 111 B1**
(45) Veröffentlichungstag und Bekanntmachung des Hinweises auf die Patenterteilung: **23.06.2021**
(21) Anmeldenummer: 17197648.3
(22) Anmeldetag: 20.10.2017
(51) Int. Cl.: B65G 47/88, B65G 1/08

(54) **SEPARIERVORRICHTUNG FÜR EIN FÖRDERSYSTEM ZUR BEFÖRDERUNG VON STÜCKGUT**
SEPARATING DEVICE FOR A CONVEYOR SYSTEM FOR CONVEYING PIECE GOODS
DISPOSITIF DE SÉPARATION POUR UN SYSTÈME DE TRANSPORT DESTINÉ À TRANSPORTER LA MARCHANDISE

(30) Priorität: 21.10.2016 DE 102016220676
(43) Veröffentlichungstag der Anmeldung: 25.04.2018
(73) Patentinhaber: Saar Lagertechnik GmbH, 65812 Bad Soden (DE)
(72) Erfinder: GÖB, Christoph, 65812 Bad Soden (DE); SCHMITT, John-Richard, 65520 Bad Camberg (DE)
(74) Vertreter: Richardt Patentanwälte PartG mbB

(56) Entgegenhaltungen:
- EP-A2- 1 897 823
- DE-C1- 3 243 086
- DE-U1-202011 004 513
- JP-A- H01 299 106
- JP-U- S5 352 587

## Beschreibung

Die Erfindung betrifft eine Separiervorrichtung für ein Fördersystem zur Beförderung von Stückgut sowie ein Fördersystem zur Beförderung von Stückgut.

Fördersysteme kommen zum Einsatz, um Stückgut, wie zum Beispiel Paletten oder Behälter oder Kartons von einer Aufgabeseite zu einer Entnahmeseite zu befördern. Ziel ist es dabei, das Stückgut an der Entnahmeseite bereitzustellen, sodass nach Entnahme des Stückguts an der Entnahmeseite das dahinter befindliche nächste Stückgut nachrollt und zur Entnahme ebenfalls an der Entnahmeseite zur Verfügung steht. Entsprechende Fördersysteme sind zum Beispiel schwerkraftbetriebene Durchlaufregale, wobei die Beförderung von Stückgut von der Aufgabeseite zur Entnahmeseite schwerkraftbedingt automatisch erfolgt. Möglich ist jedoch, dass alternativ oder zusätzlich eine motorische Unterstützung bei der Beförderung des Stückguts zum Einsatz kommt.

Befindet sich nun ein Stückgut an der Entnahmeseite, so muss dafür Sorge getragen werden, dass dieses Stückgut von einem entsprechenden Bediengerät von der Entnahmeseite entnommen werden kann, ohne dass es hierbei zur Beschädigung des Stückguts kommt. Problematisch könnte beispielsweise sein, dass aufgrund eines hohen Staudrucks von nachfolgendem Stückgut der vorderste Ladungsträger nicht problemlos vom Fördersystem entnommen werden kann.

Um etwaige Beschädigungen zu vermeiden ist es aus dem Stand der Technik bekannt, sogenannte Separiervorrichtungen zum Einsatz zu bringen. Diese bestehen im Wesentlichen aus einem Anschlag für das Stückgut sowie einem Steuerelement, wobei durch das Steuerelement auf der Entnahmeseite festgestellt wird, ob augenblicklich an der Entnahmeseite Stückgut zur Entnahme vorhanden ist. Ist die der Fall, geht der Anschlag in eine Separierposition über, in welcher er das "Nachrollen" von nachfolgendem Stückgut in Richtung des sich an der Entnahmeseite befindlichen Stückguts verhindert. Damit ist das sich an der Entnahmeseite befindende Stückgut frei von jeglichem Staudruck von nachfolgendem Stückgut und der vorderste Ladungsträger (das vorderste Stückgut) an der Entnahmeseite lässt sich problemlos entnehmen.

Beispielsweise offenbart die EP 2 517 982 B1 eine Separatorvorrichtung für einen Förderer mit einem Stopp, einem Trigger sowie einer Verzögerungseinrichtung, wobei die Verzögerungseinrichtung angeordnet ist, eine Bewegung des Stopps aus der Separierposition in die Förderposition zu verzögern.

Die JP S53 52587 U offenbart eine Separiervorrichtung für ein Fördersystem, wobei eine Blockierzunge der Separiervorrichtung durch einen um eine Förderrolle der Fördersystems gewickelten Seilzug mit Gegengewicht zwischen einer in den Förderweg hineinragenden Separierstellung und einer Freigabestellung rotierbar ist, sodass die Blockierzunge bei Kontakt der umwickelten Förderrolle mit dem Stückgut in die Separierposition rotiert und gegen eine starre Anschlagleiste gedrückt wird.

Die JP H01 299106 A offenbart eine Separiervorrichtung nach dem Oberbegriff des Anspruchs 1, insbesondere offenbart das Dokument ein Förder- und Lagersystem für Palettenware, wobei ein in den Förderweg hineinragender Betätigungshebel durch eine darüberlaufende Palette unter die Förderebene rotierbar ist, wobei der Betätigungshebel so an einen Teller gekoppelt ist, dass der Teller bei Kontakt der Betätigungshebels mit einer Palette in eine obere Position verschwenkt wird, wobei der Teller in der oberen Position eine Kralle aus einer in den Förderweg hineinragenden Blockierposition in eine Freigabeposition rotiert.

Die DE 20 2011 004513 U1 offenbart ein Rollenfördermodul mit einer Separationsvorrichtung, wobei die Separationsvorrichtung einen beweglichen Sperrhebel und ein bewegliches Verriegelungselement aufweist, wobei das Verriegelungselement in einer Verriegelungsposition eine Bewegung des Sperrhebels aus dessen Sperrposition verhindert und in einer Entriegelungsposition eine Bewegung des Sperrhebels in Richtung der Freigabeposition freigibt, wobei die Separationsvorrichtung weiter einen Betätigungshebel aufweist, der mechanisch so an das Verriegelungselement gekoppelt ist, dass das Verriegelungselement in einer Auslöseposition des Betätigungshebels in die Entriegelungsposition bewegt ist und in einer Halteposition des Betätigungshebels in die Verriegelungsposition bewegt ist.

EP 1 897 823 A3 betrifft ein Durchlaufregal mit Separiervorrichtung zur Separierung von von einer Aufgabeseite zu einer Entnahmeseite hin beförderten Ladungsträgern unterschiedlicher Länge.

DE 32 43 086 C1 betrifft eine Vorrichtung zum Trennen der auf der Entnahmeseite einer Rollenbahn, insbesondere eines Durchlaufregals, aus einer Entnahmestellung auszulagernden Palette von den über Bremsrollen nachrollenden Paletten, mit einer am Ende der Rollenbahn angelenkten Schaltklappe und mit einem auf Abstand hinter der auszulagernden Palette an der Rollenbahn angelenkten, durch die Schaltklappe über ein Gestänge betätigbaren Anschlagriegel, dadurch gekennzeichnet, daß der Anschlagriegel an seiner Unterseite an einem mit dem Gestänge verbundenen keilförmigen Element aufliegt.

Der Erfindung liegt die Aufgabe zugrunde, eine verbesserte Separiervorrichtung für ein Fördersystem sowie ein verbessertes Fördersystem zur Beförderung von Stückgut vorzuschlagen. Die der Erfindung zugrundeliegende Aufgabe wird durch die Merkmale des Anspruchs 1 gelöst. Bevorzugte Ausführungsformen der Erfindung sind in den abhängigen Patentansprüchen angegeben.

Es wird eine Separiervorrichtung für ein Fördersystem zur Beförderung von Stückgut in einer Förderrichtung auf einer Förderebene beschrieben, wobei
- die Separiervorrichtung einen Anschlag für das Stückgut und ein Steuerelement umfasst,
- das Steuerelement aufgrund eines in der Förderebene stattfindenden Kontakts mit dem Stückgut um eine parallel zur Förderebene und senkrecht zur Förderrichtung weisende Achse rotierbar ist,
- eine Beweglichkeit des Anschlags zwischen einer Separierposition und einer Förderposition sowie eine Blockade des Anschlags in der Separierposition wodurch das Steuerelement aufgrund der Rotation steuerbar ist,
- der Anschlag durch das Steuerelement aufgrund der Rotation bewegbar ist,
- das Steuerelement ausschließlich in und unterhalb der Förderebene senkrecht aus Richtung des Stückguts gesehen angeordnet ist.

Im Rahmen der vorliegenden Beschreibung wird die Förderebene des Fördersystems als jene ebene Fläche verstanden, auf welcher das Stückgut von der Aufgabeseite zur Entnahmeseite gleitet. Kommen beispielsweise im Fördersystem Transportrollen zum Einsatz, auf welchen das Stückgut gleitet, so wird unter der Förderebene jene Ebene verstanden, welche durch die den Transportrollen gemeinsame Tangentialebene beschrieben wird. Selbiges gilt im Falle der Verwendung von z.B. Kugeln, auf welchen das Stückgut von der Aufgabeseite zur Entnahmeseite abrollt.

Ausführungsformen der Erfindung könnten den Vorteil haben, dass das Steuerelement nicht in Richtung des Stückguts gesehen aus der Förderebene hinausragt und dennoch in zuverlässiger Weise eine Schaltung des Anschlags dergestalt möglich ist, dass der Anschlag in der Separierposition blockiert werden kann oder aber die Förderposition zum Beispiel aufgrund des durch das Stückgut auf den Anschlag wirkenden Staudrucks eingenommen werden kann. Da das Steuerelement nicht in den Förderweg, das heißt den Bewegungsweg des Stückguts hineinragt und lediglich durch den in der Förderebene stattfindenden Kontakt mit dem Stückgut gesteuert wird, wird einer etwaigen Beschädigung des Steuerelements selbst bei einer unsachgemäßen Entnahme des Stückguts an der Entnahmeposition vermieden. Ein Staplerfahrer kann beispielsweise das Steuerelement nur schwerlich mit seiner Gabel beschädigen, da das Steuerelement nicht aus der Förderebene hinausragt. Insgesamt könnte dadurch die Haltbarkeit und mechanische Gesamtstabilität der besagten Separiervorrichtung gesteigert werden. Das Risiko schwerwiegender Beschädigungen der Separiervorrichtung durch entsprechende Fördersysteme wie beispielsweise Stapelbediengeräte könnte also minimiert werden.

Nach einer Ausführungsform der Erfindung umfasst das Steuerelement eine Förderrolle des Fördersystems, wobei die Förderrolle aufgrund des in der Förderebene stattfindenden Kontakts mit dem Stückgut um die senkrecht zur Förderebene und senkrecht zur Förderrichtung weisende Achse der Förderrolle rotierbar ist. Alternativ oder zusätzlich kann das Steuerelement ein Förderband umfassen, wobei das Förderband an einer Führungsrolle gelagert ist, wobei das Förderband aufgrund des in der Förderebene stattfindenden Kontakts des Förderbandes mit dem Stückgut um die senkrecht zur Förderebene und senkrecht zur Förderrichtung weisende Achse der Führungsrolle rotierbar ist.

Insbesondere die Verwendung einer Förderrolle des Fördersystems für das Steuerelement könnte den Vorteil haben, dass damit eine Komponente als Steuerelement zum Einsatz kommt, welche ohnehin in entsprechenden Fördersystemen vorhanden ist. Zum Beispiel könnte eine bereits vorhandene Förderrolle des Fördersystems dergestalt umgerüstet werden, dass die Bewegung dieser Förderrolle (das heißt derer Rotation) dazu verwendet wird, die Beweglichkeit des Anschlags zum einen zwischen der Separierposition und der Förderposition und zum anderen die Blockade des Anschlags in der Separierposition zu steuern. Da durch die Förderrolle, wie auch durch das Förderband, dieselbe Förderebene verwendet wird, wie sie durch die übrigen Fördermittel wie beispielsweise Förderrollen oder Förderkugeln definiert wird, könnte es damit ohne umfangreiche mechanische Umbaumaßnahmen am Fördersystem möglich sein, die Separiervorrichtung zu implementieren.

Erfindungsgemäß ist das Steuerelement über eine Zugstange mit dem Anschlag mechanisch gekoppelt, wobei die Zugstange aufgrund der Rotation in und entgegen der Förderrichtung bewegbar ist. Die Zugstange kann beispielsweise mit dem Steuerelement über eine entsprechende Zahnübersetzung angekoppelt werden. Hierzu könnte beispielsweise die Zugstange teilweise als Zahnstange ausgebildet sein und es könnten am Steuerelement entsprechende Zahnräder angeordnet sein, welche in diese Zahnstange eingreifen. Möglich ist jedoch auch die Anbindung der Zugstange an das Steuerelement über andere mechanische Komponenten wie zum Beispiel Seilwinden oder Hebelmechanismen.

Nach einer Ausführungsform der Erfindung umfasst die Separiervorrichtung ferner einen Energiespeicher, wobei der Energiespeicher angeordnet ist, Energie zu gewinnen, wenn das Steuerelement aufgrund des Kontakts mit dem Stückgut um die Achse rotiert wird und außerdem Energie abzugeben durch Bewegen der Zugstange im kontaktfreien Zustand des Steuerelements mit dem Stückgut aus einer Blockierstellung in eine Freigabestellung, wobei die Bewegbarkeit des Anschlags zwischen der Separierposition und der Förderposition in der Freigabestellung gegeben ist und die Blockade des Anschlags in der Blockierstellung gegeben ist.

Die Verwendung eines Energiespeichers könnte den Vorteil haben, dass eine automatische bzw. selbständige Überführung der Zugstange von der Blockierstellung in die Freigabestellung gewährleistet wird, wenn das Steuerelement nicht mehr mit dem Stückgut in Kontakt steht. Üblicherweise wird dies dazu führen, dass aufgrund des Energiespeichers ein Überführen der Zugstange von der Blockierstellung in die Freigabestellung außerdem eine Rückrotation des Steuerelements um die Achse stattfindet. Sobald das Steuerelement mit dem nächsten Stückgut in Kontakt gerät und wieder um seine Achse rotiert wird, wird die Energie erneut gewonnen und die Zugstange von der Freigabestellung in die Blockierstellung gezogen.

Nach einer Ausführungsform der Erfindung umfasst der Energiespeicher eine Feder, wobei sich die Feder in Richtung der Förderrichtung des Stückguts erstreckt und spannbar ist. Alternativ zur Verwendung einer Feder als Energiespeicher wären beispielsweise pneumatische Speicher, Schwerkraftspeicher sowie Speicher, welche sich die Elastizität eines Materials bei der Energiegewinnung zu eigen machen, denkbar.

Erfindungsgemäß umfasst der Anschlag eine Stoppkralle und einen Riegel, wobei
- die Stoppkralle um eine parallel zur Förderebene und senkrecht zur Förderrichtung weisende Achse rotierbar ist und in der Separierposition über die Förderebene hinaus in den Laufweg des Stückguts hineinragt,
- der Riegel um eine parallel zur Förderebene und senkrecht zur Förderrichtung weisende Achse rotierbar ist und in der Separierposition eine Rotation der Stoppkralle in die Förderposition blockiert,
- die Zugstange dazu ausgebildet ist, beim Übergang von ihrer Freigabestellung in ihre Blockierstellung den Riegel zu unterlaufen und dadurch in die Separierposition zu rotieren.

Erfindungsgemäß weist die Zugstange an ihrem dem Riegel zugewandten Ende eine Abschrägung dergestalt auf, dass beim Unterlaufen des Riegels der Riegel um seine Achse nach oben in Richtung Stückgut rotiert wird, um in dieser Position ein Zurückschwenken der sich in der Separierposition befindlichen Stoppkralle zu blockieren. Befindet sich hingegen die Zugstange in der Freigabestellung kann der Riegel um seine Achse wieder zurückrotieren, wodurch die Blockade der Stoppkralle aufgegeben wird. Aufgrund beispielsweise von Federkräften und/oder des auf die Stoppkralle wirkenden Staudrucks des unmittelbar an die Stoppkralle anliegenden Stückguts kann daraufhin die Stoppkralle in die Förderposition rotiert werden, wobei die sich Stoppkralle dann in der Förderposition maximal in der Förderebene und ansonsten außerhalb bzw. unterhalb des Laufwegs des Stückguts befindet. Der Laufweg des Stückguts ist dabei grundsätzlich jener Bewegungsweg des Stückguts auf der Förderebene in Richtung zur Entnahmeseite hin.

Nach einer Ausführungsform der Erfindung ist der Riegel dazu ausgebildet, schwerkraftbedingt und/oder bedingt durch die Kraft eines elastischen Elements in der Freigabestellung der Zugstange die Förderposition einzunehmen. Alternativ oder zusätzlich ist die Stoppkralle dazu ausgebildet, schwerkraftbedingt und/oder bedingt durch eine Kraft eines elastischen Elements in der Freigabestellung der Zugstange die Separierposition einzunehmen. Grundsätzlich ist vorzuziehen, dass schwerkraftbedingte Schwenkvorgänge sowohl von Stoppkralle als auch von Riegel zum Einsatz kommen, da hiermit die Anzahl der verwendeten Einzelteile der Separiervorrichtung minimiert wird und damit die Anzahl der Einzelteile minimiert wird, welche einem Verschleiß unterliegen können. Auf der anderen Seite könnte insbesondere bei hohen Staudrücken und damit starken Kräften, welche zwischen Riegel und Stoppkralle vorherrschen, die zusätzliche oder alternative Verwendung von elastischen Elementen wie Federn dazu beitragen, dass die Zuverlässigkeit, mit welcher der Riegel die Förderposition einnimmt, deutlich erhöht werden. Selbst bei extremen Reibkräften, die damit zwischen Riegel und Stoppkralle herrschen, könnte es möglich sein, den Riegel zuverlässig in die Förderposition zu überführen.

Nach einer Ausführungsform der Erfindung weist die Stoppkralle eine frei rotierbare Rolle auf, wobei die Stoppkralle ausschließlich über die Rolle an den Riegel anliegt. Die Verwendung einer frei rotierbaren Rolle, über welche die Stoppkralle an dem Riegel anliegt, könnte den Vorteil haben, dass dadurch die Reibungskräfte zwischen Stoppkralle und Riegel minimiert werden. Vorzugsweise ist die frei rotierbare Rolle eine kugelgelagerte Rolle, zum Beispiel ein kugelgelagertes Rad, welches auf einer Oberflächenkontur des Riegels abrollbar ist. Anschaulich gesprochen könnte also vermieden werden, dass die Stoppkralle am Riegel entlangschleift und aufgrund zu hoher Reibkräfte die Bewegung des Riegels blockiert wird, obwohl sich die Zugstange in ihrer Freigabestellung befindet.

Nach einer Ausführungsform der Erfindung ist die Rolle in einer Kulisse der Stoppkralle gelagert, wobei der Riegel eine Oberflächenkontur aufweist, entlang welcher die Rolle beim Übergang der Stoppkralle von der Separierposition in die Förderposition abrollbar ist, wobei die Oberflächenkontur und die Kulisse ausgeformt sind, die beim Übergang des Riegels von der Separierposition in die Förderposition durch die Rolle auf die Oberflächenkontur ausgeübten Rollreibungskräfte zu minimieren. Während also auf der einen Seite die Stoppkralle um ihre Achse lediglich in Rotationsrichtung bewegbar ist, ist auf der anderen Seite die frei rotierbare Rolle in einer Kulisse der Stoppkralle gelagert. Durch die entsprechende Ausformung von Oberflächenkontur und Kulisse könnte sichergestellt werden, dass in jeder relativen Position von rotierbarer Rolle und Riegel zueinander auf die Rolle dieselben Kräfte wirken, sodass insgesamt eine leichtgängige Rotation des Riegels um seine Achse zwischen der Separierposition und der Förderposition gewährleistet ist.

Nach einer weiteren Ausführungsform der Erfindung umfasst die Separiervorrichtung ferner eine Verzögerungseinheit, wobei die Verzögerungseinheit dazu ausgebildet ist, die Aufhebung der Blockade des Anschlags zur Ermöglichung der nachfolgenden Bewegung des Anschlags aus der Separierposition in die Förderposition zeitlich zu verzögern. Das Vorsehen einer Verzögerungseinheit könnte den Vorteil haben, dass mit Entfernen des Stückguts von dem Steuerelement nicht schlagartig die Blockade des Anschlags in der Separierposition freigegeben wird, sondern dass die Freigabe dieser Blockade erst nach Ablauf einer bestimmten Zeitdauer erfolgt, nachdem das Stückgut vom Steuerelement abgehoben wurde, also der Kontakt zwischen Steuerelement und darüber befindlichem Stückgut aufgegeben wurde. In einem praktischen Beispiel, bei welchem eine Palette mit einem Stapel-Bediengerät von der Entnahmeposition entnommen wird, bedeutet dies, dass die Bedienperson des Stapel-Bediengeräts ausreichend Zeit hat, um die Palette vollständig von der Entnahmeposition zu entnehmen, bevor der Anschlag aus der Separierposition wieder die Förderposition einnimmt und eine nachfolgende Palette zur Entnahmeseite rollt.

Beispielsweise umfasst die Verzögerungseinheit einen Arbeitszylinder mit Drosselrückschlagventil. Bei dem Arbeitszylinder kann es sich beispielsweise um einen Pneumatik- oder Hydraulikzylinder handeln. Die Verwendung des Drosselrückschlagventils dient dazu, das mit dem Arbeitszylinder verwendete Medium wie beispielsweise eine Flüssigkeit oder ein Gas lediglich in einer Richtung zu drosseln und in der anderen Richtung ungedrosselt durchfließen zu lassen. Beim Drosselvorgang wird beispielsweise die Rückrotation des Steuerelements bzw. die Rückwärtsbewegung der Zugstange verlangsamt durchgeführt, wobei in diesem Fall vorzugsweise die Zugstange so ausgebildet ist, dass erst nach Zurücklegen eines vorbestimmten Wegs der Zugstange das Unterlaufen des Riegels in der Blockierstellung aufgehoben wird.

Wenn allerdings das Steuerelement aufgrund des Kontakts mit dem Stückgut um ihre Achse rotiert, so erfolgt dies aufgrund des Drosselrückschlagventils nahezu ungehindert, da für diesen Fall das Drosselrückschlagventil im Arbeitszylinder das Arbeitsmedium ungedrosselt durchfließen lässt.

Nach einer Ausführungsform der Erfindung umfasst der Arbeitszylinder eine Kolbenstange, wobei die Kolbenstange mechanisch mit der Zugstange gekoppelt ist. Es ist für den Fachmann verständlich, dass die Kolbenstange wiederum mit einem Kolben verbunden ist, welche mit ihrer Wirkfläche das Volumen des Zylinders verändern und mit dem Hydraulikmedium bzw. dem Arbeitsmedium beaufschlagt wird. Die Kopplung der Zugstange mit der Kolbenstange könnte den Vorteil haben, dass hierdurch ein besonders einfacher mechanischer Aufbau ermöglicht werden könnte, da ein typischer Arbeitszylinder eine lineare Arbeitsweise besitzt, welche in Erstreckungsrichtung der Kolbenstange arbeitet. Die mechanische Kopplung mit der Zugstange ermöglicht damit eine einfache entsprechende Kraftübertragung. Selbstverständlich ist es jedoch auch möglich, über entsprechende Hebelmechanismen die Kolbenstange mit der Zugstange mechanisch zu koppeln.

Nach einer Ausführungsform der Erfindung umfasst die Verzögerungseinheit eine Bremsrolle des Fördersystems. Zum Beispiel könnte außerdem das Steuerelement und die Verzögerungseinheit gemeinsam durch die Bremsrolle des Fördersystems gebildet werden. Grundsätzlicher Sinn einer Bremsrolle ist es, dass im Fördersystem ein sanftes Abbremsen der beförderten Stückgüter gewährleistet werden kann. Insbesondere können zum Beispiel Stückgüter mit sehr unterschiedlichen Gewichten selbst bei stärkerer Neigung im Fall von schwerkraftbedingten Fördersystemen zuverlässig von der Aufgabeseite zur Entnahmeseite befördert werden, ohne dass die Stückgüter zu schnell werden und mit zu viel Schwung an der Entnahmeseite ankommen. Zwar ist es grundsätzlich möglich, eine Bremsrolle lediglich als Verzögerungseinheit und vollkommen losgelöst von der zusätzlichen Verwendung als Förderrolle zum Einsatz zu bringen. Bevorzugt wird allerdings die Verwendung der Bremsrolle tatsächlich als Förderrolle an der Entnahmeposition, sodass zum einen das Stückgut langsam und kontrolliert an die Entnahmeposition gleitet und zum zweiten bei Entfernen des Stückguts von der Entnahmeposition die Zugstange bzw. allgemein das Steuerelement in verlangsamter Weise wieder seine Initialposition einnimmt.

Wird als Steuerelement gleich eine Bremsrolle verwendet, so dient diese Bremsrolle gleichzeitig sowohl als Steuerelement als auch als Verzögerungseinheit, sodass der Aufwand zur mechanischen Umrüstung von Fördersystemen insoweit minimiert wird, als dass auf zusätzliche mechanische Komponenten einer Verzögerungseinheit verzichtet werden kann.

In einem weiteren Aspekt betrifft die Erfindung ein Fördersystem zur Beförderung von Stückgut in einer Förderrichtung auf einer Förderebene, wobei das Fördersystem eine Separiervorrichtung, wie obig beschrieben, umfasst.

Es sei angemerkt, dass die obig beschriebenen Ausführungsformen in beliebiger Weise miteinander kombiniert werden können, solange sich die Kombinationen nicht gegenseitig ausschließen.

Im Folgenden werden bevorzugte Ausführungsformen der Erfindung anhand der Zeichnungen näher erläutert. Es zeigen:
- Figur 1: eine schematische Ansicht eines Fördersystems zur Beförderung von Stückgut,
- Figur 2: eine Querschnittsansicht einer Separiervorrichtung,
- Figur 3: eine Querschnittsansicht des Anschlags der Separiervorrichtung der Figur 2,
- Figur 4: eine weitere Querschnittsansicht eines Anschlags,
- Figur 5: eine weitere Querschnittsansicht eines Anschlags.

Im Folgenden werden einander ähnliche Elemente mit den gleichen Bezugszeichen gekennzeichnet.

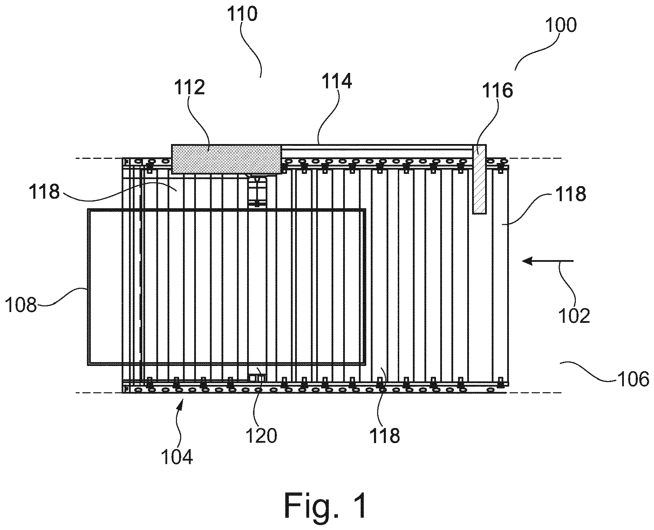

Die Figur 1 zeigt ein Fördersystem 100 zur Beförderung von Stückgut 108 in einer Förderrichtung 102 von einer Aufgabeseite 106 zu einer Entnahmeseite 104. Das Stückgut, zum Beispiel eine Palette, kann über Rollen 118 des Fördersystems in Richtung 102 befördert werden.

Die Bewegung des Stückguts in Richtung 102 über die Rollen 118 erfolgt beispielsweise schwerkraftbedingt, wenn das Fördersystem 100 leicht nach unten von der Aufgabeseite 106 zur Entnahmeseite 104 hin geneigt ist.

Befindet sich nun eine Palette 108 auf der Entnahmeseite 104 bzw. an der Entnahmeposition 104, so muss sichergestellt werden, dass nachfolgende Paletten nicht von hinten auf diese an der Entnahmeposition 104 befindliche Palette 108 auflaufen, da dann aufgrund des vorherrschenden Staudrucks zum Beispiel ein Staplerfahrer nicht mehr dazu in der Lage wäre, die Palette 108 von der Entnahmeposition 104 ohne Beschädigung der Palette wegzunehmen. Aus diesem Grund ist eine Separiervorrichtung 110 vorgesehen, welche über einen Anschlag 116 dafür sorgt, dass wenn die Palette 108 an der Entnahmeposition 104 gelegen ist, keine weiteren Paletten in Richtung 102 eben jenen Anschlag 116 passieren können und auf die an der Entnahmeposition befindliche Palette auflaufen können.

Damit nun der Anschlag 116 zum richtigen Zeitpunkt die Weiterfahrt nachfolgender Paletten in Richtung 102 blockiert, ist ferner ein Steuerelement 112 für die Separiervorrichtung vorgesehen, wobei dieses Steuerelement 112 über ein Kopplungselement 114 mit dem Anschlag 116 mechanisch gekoppelt ist.

Im vorliegenden Beispiel sei ohne Beschränkung der Allgemeinheit davon ausgegangen, dass das Steuerelement eine spezielle Förderrolle 120, zum Beispiel eine Bremsförderrolle des Fördersystems 100, umfasst. Möglich ist jedoch auch, wie obig beschrieben, die Verwendung eines sich in der Förderebene befindlichen Förderbandes, welches an einer entsprechenden Führungsrolle gelagert ist. Diese Führungsrolle muss dabei keine der Führungsrollen 118 sein.

Wenn die Palette 108 über die Bremsförderrolle 120 rollt, so ergibt sich ein in der Förderebene stattfindender Kontakt zwischen Palettenkufen und Bremsförderrolle, wodurch die Bremsförderrolle in eine Rotation versetzt wird. Aufgrund dieser Rotation wird das Kopplungselement 114 in geeigneter Weise in Bewegung gesetzt, um dadurch den Anschlag 116 in eine Separierposition zu verfahren. In der Separierposition ragt der Anschlag 116 starr in den Bewegungsweg nachfolgender Paletten, sodass diese an einer Weiterfahrt in Richtung 102 gehindert werden.

Das Steuerelement verfügt ferner über einen Energiespeicher, der dazu in der Lage ist, nach Entfernen der Palette 108 von der Entnahmeposition 104 das Kopplungselement 114 und/oder die Bremsförderrolle 120 wieder so zu bewegen, dass nun der Anschlag durch die nun nachfolgende Palette von der Separierposition wieder in eine Förderposition bewegbar ist. In der Förderposition wird die nun nachfolgende Palette an einer Weiterfahrt in Richtung 102 in Richtung Entnahmeposition 104 nicht mehr gehindert.

Durch die besagte Verwendung einer Bremsförderrolle 120 oder eines gleichwirkenden Förderbandes ist sichergestellt, dass das Steuerelement 110 nicht aus der Förderebene in Richtung der Palette 108 gesehen herausragt. Dadurch, dass lediglich in der Förderebene ein Kontakt zwischen Steuerelement und Palette stattfindet und außerdem nichts aus der Förderebene hinausragt, ist die Wahrscheinlichkeit eine Beschädigung der Separiervorrichtung minimiert. Eine Beschädigung wäre insbesondere dann möglich, wenn es durch den besagten Staplerfahrer zum Beispiel zu einer ungewollten Berührung der Separiervorrichtung mit einer Zinkengabel des Stapelfahrzeugs oder der Palette selbst kommt.

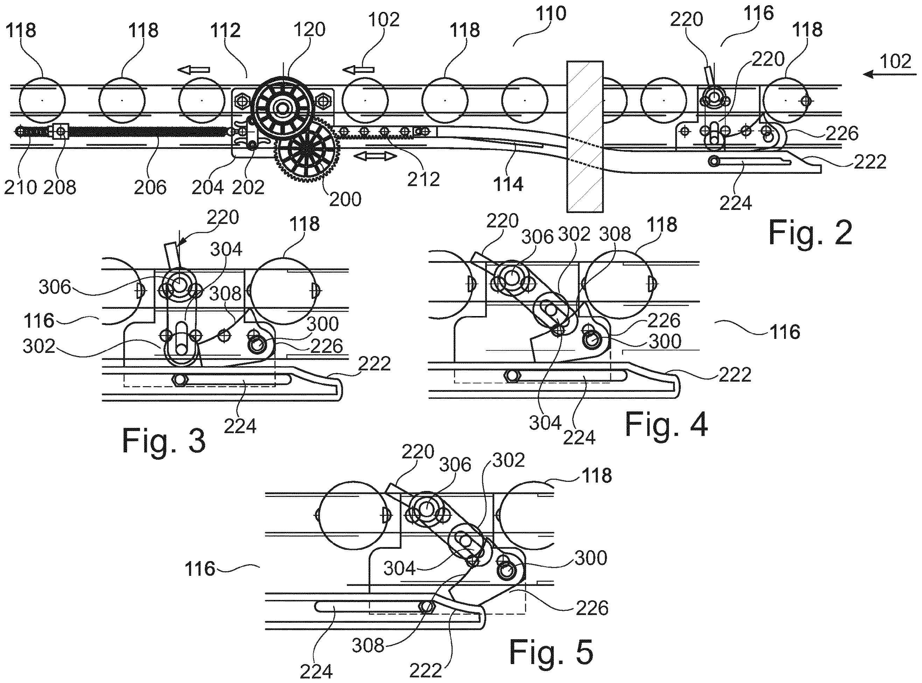

Die Figur 2 zeigt eine schematische Querschnittsansicht der Separiervorrichtung 110, umfassend das Steuerelement 112 und den daran angekoppelten Anschlag 116. Im Querschnitt zunächst ersichtlich sind die Förderrollen 118, welche in Richtung 102 hintereinander am Fördersystem angeordnet sind. Ebenfalls ersichtlich ist jene besagte Bremsförderrolle 120, welche bei einer darüber bewegten Palette in Gegenuhrzeigersinn rotiert werden kann.

Die Bremsförderrolle 120, auch Bremstragrolle genannt, verfügt über eine Zahnkontur, über welche sie mit einem doppelten Zahnrad 200 mechanisch gekoppelt ist. Am doppelten Zahnrad ist über eine Halteplatte 202 eine Zahnstange 212 gelagert. Dies führt dazu, dass im Falle der Rotation der Bremstragrolle in Richtung gegen den Uhrzeigersinn die Zahnstange entgegen der Richtung 102, das heißt in der Figur 2 von links nach rechts, verschoben wird. Das bereits aus Figur 1 bekannte Kopplungselement ist im vorliegenden Beispiel eine Zugstange 114, welche mit der Zahnstange 212 mechanisch gekoppelt ist. Die Zugstange 114 verfügt selbst über ein Langloch 224 und ist über das Langloch in Richtung und entgegen der Richtung 102 am Fördersystem verschiebbar gelagert.

Ferner weist die Separiervorrichtung 110 eine Zugfeder 206 auf, welche an einem Federhalter 208 gehalten ist. Mittels eines Federspanners 210 kann die Zugfeder 206 in gewünschter Weise vorgespannt werden. Die Bremstragrolle 120, das doppelte Zahnrad 200 und die Halteplatte für die Zahnstange sind über eine entsprechende Halteplatte 204 am Fördersystem gelagert. Die Zugfeder ist zwischen dem Federhalter 208 und der Zahnstange 212 gespannt und sorgt dafür, dass die Zahnstange 212 in Richtung 102 von rechts nach links gezogen wird, wenn sich die Bremstragrolle 120 im unbelasteten Zustand durch eine Palette befindet. In anderen Worten, wenn die Bremstragrolle 120 von einer Palette freigegeben ist, sorgt die Zugfeder 206 dafür, dass die Zugstange 212 von rechts nach links zurückgezogen wird, wodurch, je nach mechanischer Ausführung, nebst des doppelten Zahnrades 200 auch die Bremstragrolle 120 wieder in ihre ursprüngliche Position zurückrotiert werden kann. Es ist jedoch auch möglich, dass bei der Rückwärtsbewegung das doppelte Zahnrad nicht mitrotiert und die Zähne der Zahnstange lediglich über die Zähne des Zahnrades ratschen.

Die Figur 3 ist eine Ausschnittsvergrößerung des Anschlags 116 der Figur 2, wobei hier exakt der in Figur 2 gezeigte Zustand des Anschlags wiedergegeben ist. Der Anschlag 116 umfasst eine Stoppkralle 220, welche um eine Achse 306 rotierbar gelagert ist. Ferner umfasst der Anschlag 116 einen Riegel 226, der um eine weitere Achse 300 gelagert ist.

In dem in Figur 3 gezeigten Zustand ragt die Stoppkralle 220 in den Laufweg etwaiger nachfolgender Paletten. Trifft nun eine solche Palette mit ihrer Kufe auf die Stoppkralle 220, so versucht diese eine Rotation um ihre Achse 306 durchzuführen. In dem in Figur 3 gezeigten Zustand wird allerdings eine solche Rotation durch den Riegel 226 blockiert. Dadurch wird also verhindert, dass die Stoppkralle 220 von der Separierposition in ihre Förderposition, wie sie beispielsweise in der Figur 5 gezeigt ist, rotiert werden kann. In der Förderposition der Fig. 5 befindet sich die Stoppkralle 220 genau an oder vorzugsweise unterhalb der Förderebene und bildet somit kein Hindernis für die nachfolgende, auf der Förderebene laufenden Palette.

Der in Figur 3 gezeigte Zustand wird erreicht, wenn eine Palette über die Bremstragrolle 120 gefahren ist und dort in ihrer Entnahmeposition verharrt. Dadurch wurde, wie bereits oben beschrieben, aufgrund der Bewegung der Zahnstange 220 und der Zugstange 114 das dem Anschlag zugewandte Ende 222 so entgegen Richtung 102 verschoben, dass nun der Riegel 226 unterlaufen ist und durch die Zugstange nach oben in Richtung Förderebene gedrückt verharrt. In dieser Position bildet der Riegel 226 einen Anschlag für eine Rolle 302, welche in einem Langloch bzw. einer Kulisse 304 frei rotierbar an der Stoppkralle 220 gelagert ist.

Während die Figur 3 den Zustand zeigt, in dem der Anschlag bzw. die Stoppkralle 220 unbeweglich in der Separierposition gefangen ist, zeigt die Figur 5 den Zustand, in welchem die Stoppkralle 220 um ihre Achse 306 frei rotierbar zwischen der Separierposition und der Förderposition ist. In diesem Zustand ist aufgrund der Zugwirkung der Feder 206 die Zahnstange 212 bzw. die Zugstange 114 in eine Position zurückgezogen, in welcher ein abgeschrägtes Ende 222 der Zugstange 114 eine freie Rotationsbewegung des Riegels 226 um die Achse 300 in Gegenuhrzeigersinn ermöglicht. Die Rotation ist beispielsweise das Resultat eines schwerkraftbedingten Schwenkvorgangs des Riegels 226 und/oder eines durch ein elastisches Element gestützten Rotationsvorgang des Riegels 226. Das elastische Element, beispielsweise eine Feder, kann zwischen dem Riegel 226 und dem Fördersystem gespannt sein.

Die Stoppkralle 220 ist so aufgebaut, dass sie ebenfalls schwerkraftbedingt und/oder federunterstützt im unbelasteten Zustand in der Separierposition verharrt, in welcher die Stoppkralle 220 in den Laufweg der Paletten hineinragt. Kommt nun eine Palette von rechts aus Richtung 102 und trifft diese in dem in Figur 5 gezeigten Zustand des Riegels auf die Stoppkralle 220 auf, so wird die Stoppkralle 220 um ihre Achse 306 im Gegenuhrzeigersinn rotiert. Mittels der frei rotierbaren Rolle 304 läuft daraufhin das der Palette abgewandte Ende der Stoppkralle an einer Oberflächenkontur 308 des Riegels 226 entlang nach oben.

In der Figur 4 ist ein Zwischenzustand gezeigt, in welchem zum einen eine Palette bereits angefangen hat, die Bremstragrolle 120 zu überfahren und deshalb zu rotieren und aufgrund dessen sich die Zugstange 114 nach rechts entgegen Richtung 102 verschoben hat. Das hintere Ende der Palette befindet sich dennoch auf der Stoppkralle 220 liegend, sodass sich diese noch in der Förderposition befindet. Aufgrund der bereits in Gegenrichtung 102 nach rechts bewegtem Zugstange hat diese nun den Riegel 226 unterlaufen und dadurch aufgrund der Schräge 222 in die Separierposition um die Achse 300 rotiert. Aufgrund der frei rotierbaren Rolle 302 und deren Lagerung im Langloch 304 war eine solche Rotation zurück in die Separierposition möglich, obwohl sich die Stoppkralle 220 in diesem Augenblick noch in der Förderposition befand. Sobald nun die Stoppkralle 220 von der Palette vollständig freigegeben ist, rollt die Stoppkralle 220 mit ihrer frei rotierbaren Rolle 302 an der Oberflächenkontur 308 des Riegels 226 entlang, das heißt die Stoppkralle 220 führt eine Rotation im Uhrzeigersinn um die Achse 306 durch. Sobald dann die Stoppkralle 220 wieder ihre in Figur 3 gezeigte Position eingenommen hat, ist eine gegenläufige Rotation der Stoppkralle 220 in Richtung des Gegenuhrzeigersinns durch das Anliegen der Rolle 302 am Riegel 226 blockiert - die Stoppkralle 220 ist in der Separierposition gefangen.

In den obig in Bezug auf die Zeichnungen diskutierten Beispielen kam eine Bremstragrolle 120 zum Einsatz. Grund ist, dass eine Bremstragrolle beispielsweise ein internes Planetengetriebe aufweist, welches die Rotation der Bremstragrolle 120 abbremst. Dies kann insbesondere dann den Vorteil haben, wenn sich die Zugstange 114 vollständig unter den Riegel 226 geschoben hat, das heißt, die Zugfeder 206 gespannt ist. Wird nämlich dann eine auf der Bremstragrolle 120 befindliche Palette von der Bremstragrolle abgehoben, so sorgt das Planetengetriebe der Bremstragrolle 120 dafür, dass die Feder 206 die Zugstange 114 nur langsam wieder zurückziehen kann. Das Zurückziehen der Zugstange 114 sorgt für eine Gegenrotation von doppeltem Zahnrad 200 und damit auch von Bremstragrolle 120, wobei eben jene besagten Rotationen und Bewegungen aufgrund des Vorhandenseins des Planetengetriebes verlangsamt werden. Dadurch hat ein Staplerfahrer ausreichend Zeit, die Palette von der Bremstragrolle 120 zu entfernen, bevor die Stoppkralle 220 von dem in Figur 3 gezeigten Zustand in den in Figur 5 gezeigten Zustand aufgrund einer nachfolgenden Palette übergehen kann. Alternativ zur Verwendung einer Bremstragrolle 120 könnte auch hier eine "normale" rotierbare Rolle zum Einsatz kommen, wobei ein entsprechender Verzögerungsvorgang des Zurückziehens der Zugstange 114 über einen an der zwischen Zugstange 114 und Fördersystem angeordneten Arbeitszylinder mit Drosselrückschlagventil kontrolliert werden kann.

Selbstverständlich sind auch alle anderen Arten von Verzögerungseinrichtungen geeignet, welche in der Lage sind, die Rückwärtsbewegung der Zugstange in Richtung 102 zu verlangsamen.

### Bezugszeichenliste

- 100: Fördersystem
- 102: Richtung
- 104: Entnahmeseite
- 104: Aufgabeseite
- 108: Palette
- 110: Separiervorrichtung
- 112: Steuerelement
- 114: Kopplungselement
- 116: Anschlag
- 114: Förderrolle
- 120: Bremsrolle
- 200: doppeltes Zahnrad
- 202: Halteplatte Zahnstange
- 204: Halteplatte Steuerelement
- 206: Zugfeder
- 208: Federhalter
- 210: Federspanner
- 212: Zahnstange
- 220: Stoppkralle
- 222: Schräge
- 224: Kulisse bzw. Langloch
- 300: Achse
- 302: frei rotierbare Rolle
- 304: Kulisse
- 306: Achse
- 308: Oberflächenkontur

## Patentansprüche

1. Separiervorrichtung (110) für ein Fördersystem (100) zur Beförderung von Stückgut (108) in einer Förderrichtung (102) auf einer Förderebene, wobei
- die Separiervorrichtung (110) einen Anschlag (116) für das Stückgut (108) und ein Steuerelement (112) umfasst,
- das Steuerelement (112) aufgrund eines in der Förderebene stattfindenden Kontakts mit dem Stückgut (108) um eine parallel zur Förderebene und senkrecht zur Förderrichtung (102) weisende Achse rotierbar ist,
- eine Beweglichkeit des Anschlags (116) zwischen einer Separierposition und einer Förderposition sowie eine Blockade des Anschlags (116) in der Separierposition durch das Steuerelement (112) aufgrund der Rotation steuerbar ist,
- der Anschlag (116) durch das Steuerelement (112) aufgrund der Rotation bewegbar ist,
- das Steuerelement (112) über eine Zugstange (114) mit dem Anschlag (116) mechanisch gekoppelt ist, wobei die Zugstange (114) aufgrund der Rotation in und entgegen der Förderrichtung (102) bewegbar ist, wobei der Anschlag (116) eine Stoppkralle (220) und einen Riegel (226) umfasst, wobei
- die Stoppkralle (220) um eine parallel zur Förderebene und senkrecht zur Förderrichtung (102) weisende Achse (306) rotierbar ist und in der Separierposition über die Förderebene hinaus in den Laufweg des Stückguts (108) hineinragt,
- der Riegel (226) um eine parallel zur Förderebene und senkrecht zur Förderrichtung (102) weisende Achse (300) rotierbar ist und in der Separierposition eine Rotation der Stoppkralle (220) in die Förderposition blockiert,
**dadurch gekennzeichnet, dass**
- das Steuerelement (112) ausschließlich in und unterhalb der Förderebene senkrecht aus Richtung des Stückguts (108) gesehen angeordnet ist,
- die Zugstange (114) dazu ausgebildet ist, beim Übergang von ihrer Freigabestellung in ihre Blockierstellung den Riegel (226) zu unterlaufen und dadurch in die Separierposition zu rotieren,
- die Zugstange (114) an ihrem dem Riegel (226) zugewandten Ende eine Abschrägung (222) aufweist, wobei die Abschrägung (222) ausgebildet ist, dass beim Unterlaufen des Riegels (226) der Riegel (226) um seine Achse nach oben in Richtung Stückgut (108) rotiert wird, um in dieser Position ein Zurückschwenken der sich in der Separierposition befindlichen Stoppkralle (220) zu blockieren,
- die Zugstange (114) ausgebildet ist, dass wenn sich die Zugstange (114) hingegen in der Freigabestellung befindet der Riegel (226) um seine Achse wieder zurückrotieren kann, wodurch die Blockade der Stoppkralle aufgegeben wird.

2. Separiervorrichtung (110) nach Anspruch 1, wobei das Steuerelement (112)
- eine Förderrolle (120) des Fördersystems (100) umfasst, wobei die Förderrolle (120) aufgrund des in der Förderebene stattfindenden Kontakts mit dem Stückgut (108) um die parallel zur Förderebene und senkrecht zur Förderrichtung (102) weisende Achse der Förderrolle (120) rotierbar ist und/oder
- ein Förderband umfasst, wobei das Förderband an einer Führungsrolle gelagert ist, wobei das Förderband aufgrund des in der Förderebene stattfindenden Kontakts des Förderbandes mit dem Stückgut (108) um die parallel zur Förderebene und senkrecht zur Förderrichtung (102) weisende Achse der Führungsrolle rotierbar ist.

3. Separiervorrichtung (110) nach Anspruch 1, ferner mit einem Energiespeicher (206), wobei der Energiespeicher (206) angeordnet ist,
- Energie zu gewinnen, wenn das Steuerelement (112) aufgrund des Kontakts mit dem Stückgut (108) um die Achse rotiert wird und
- Energie abzugeben durch Bewegen der Zugstange (114) im kontaktfreien Zustand des Steuerelements (112) mit dem Stückgut (108) aus einer Blockierstellung in eine Freigabestellung, wobei die Bewegbarkeit des Anschlags (116) zwischen der Separierposition und der Förderposition in der Freigabestellung gegeben ist und die Blockade des Anschlags (116) in der Blockierstellung gegeben ist.

4. Separiervorrichtung (110) nach Anspruch 1, wobei
- der Riegel (226) dazu ausgebildet ist, schwerkraftbedingt und/oder bedingt durch die Kraft eines elastischen Elements in der Freigabestellung der Zugstange (114) die Förderposition einzunehmen, und/oder
- die Stoppkralle (220) dazu ausgebildet ist, schwerkraftbedingt und/oder bedingt durch die Kraft eines elastischen Elements in der Freigabestellung der Zugstange (114) die Separierposition einzunehmen.

5. Separiervorrichtung (110) nach Anspruch 1 oder 4, wobei die Stoppkralle (220) eine frei rotierbare Rolle (302) aufweist, wobei die Stoppkralle (220) ausschließlich über die Rolle (302) an dem Riegel (226) anliegt.

6. Separiervorrichtung (110) nach Anspruch 5, wobei die Rolle (302) in einer Kulisse (304) der Stoppkralle (220) gelagert ist, wobei der Riegel (226) eine Oberflächenkontur (308) aufweist, entlang welcher die Rolle (302) beim Übergang der Stoppkralle (220) von der Separierposition in die Förderposition abrollbar ist, wobei die Oberflächenkontur (308) und die Kulisse (304) ausgeformt sind, die beim Übergang des Riegels (226) von der Separierposition in die Förderposition durch die Rolle (302) auf die Oberflächenkontur (308) ausgeübten Rollreibungskräfte zu minimieren.

7. Separiervorrichtung (110) nach einem der vorigen Ansprüche, ferner mit einer Verzögerungseinheit, wobei die Verzögerungseinheit dazu ausgebildet ist, die Aufhebung der Blockade des Anschlags (116) zur Ermöglichung der nachfolgenden Bewegung des Anschlags (116) aus der Separierposition in die Förderposition zeitlich zu verzögern.

8. Separiervorrichtung (110) nach Anspruch 7, wobei die Verzögerungseinheit eine Bremsrolle (120) des Fördersystems (100) umfasst.

9. Fördersystem (100) zur Beförderung von Stückgut (108) in einer Förderrichtung (102) auf einer Förderebene, wobei das Fördersystem (100) eine Separiervorrichtung (110) nach einem der vorigen Ansprüche umfasst.

## Claims

1. A separating device (110) for a conveyor system (100) for conveying piece goods (108) in a conveying device (102) on a conveying plane,
- the separating device (110) comprising a stop (116) for the piece goods (108), and a control element (112);
- the control element (112), as a result of contact with the piece goods (108) occurring in the conveying plane, being rotatable about an axis that is oriented parallel to the conveying plane and perpendicularly to the conveying direction (102);
- a movability of the stop (116) between a separating position and a conveying position, as well as a blockage of the stop (116) in the separating position, being controllable by the control element (112) as a result of the rotation;
- the stop (116) being movable by the control element (112) as a result of the rotation; and
- the control element (112) being mechanically coupled to the stop (116) by way of a pull rod (114), the pull rod (114) being movable in and counter to the conveying direction (102) as a result of the rotation,
the stop (116) comprising a stopping claw (220) and a bar (226),
- the stopping claw (220) being rotatable about an axis (306) that is oriented parallel to the conveying plane and perpendicularly to the conveying direction (102) and, in the separating position, protruding beyond the conveying plane into the path of the piece goods (108); and
- the bar (226) being rotatable about an axis (300) that is oriented parallel to the conveying plane and perpendicularly to the conveying direction (102) and, in the separating position, blocking a rotation of the stopping claw (220) into the conveying position,
**characterized in that**
- the control element (112) is arranged perpendicularly exclusively in and beneath the conveying plane, as seen from the direction of the piece goods (108);
- the pull rod (114) is designed, during the transition from the release position thereof into the blocking position thereof, to slide beneath the bar (226), and to thereby rotate into the separating position;
- the pull rod (114) has a chamfer (222) at the end thereof facing the bar (226), the chamfer (222) being designed, when sliding beneath the bar (226), to rotate the bar (226) about the axis thereof upwardly in the direction of the piece goods (108) so as to, in this position, block the stopping claw (220), which is in the separating position, from pivoting back; and
- the pull rod (114) is designed that, when the pull rod (114) is in the release position, the bar (226) is able to rotate back about the axis thereof again, whereby the blockage of the stopping claw is lifted.

2. The separating device (110) according to claim 1, wherein the control element (112) comprises
- a conveyor roller (120) of the conveyor system (100), the conveyor roller (120), as a result of the contact with the piece goods (108) occurring in the conveying plane, being rotatable about the axis of the conveyor roller (120) which is oriented parallel to the conveying plane and perpendicularly to the conveying direction (102), and/or
- a conveyor belt, the conveyor belt being mounted on a guide roller, the conveyor belt, as a result of the contact of the conveyor belt with the piece goods (108) occurring in the conveying plane, being rotatable about the axis of the guide roller which is oriented parallel to the conveying plane and perpendicularly to the conveying direction (102).

3. The separating device (110) according to claim 1, furthermore comprising an energy store (206), the energy store (206) being arranged
- to produce energy when the control element (112), as a result of the contact with the piece goods (108), is rotated about the axis, and
- to give off energy by a movement of the pull rod (114), in the contactless state of the control element (112) with the piece goods (108), out of a blocking position into a release position, the movability of the stop (116) between the separating position and the conveying position existing in the release position, and the blockage of the stop (116) existing in the blocking position.

4. The separating device (110) according to claim 1, wherein
- the bar (226) is designed to assume the conveying position as a result of gravity and/or as a result of the force of an elastic element in the release position of the pull rod (114), and/or
- the stopping claw (220) is designed to assume the separating position as a result of gravity and/or as a result of the force of an elastic element in the release position of the pull rod (114).

5. The separating position (110) according to claim 1 or 4, wherein the stopping claw (220) comprises a freely rotatable roller (302), the stopping claw (220) exclusively resting against the bar (226) by way of the roller (302).

6. The separating device (110) according to claim 5, wherein the roller (302) is mounted in a slot (304) of the stopping claw (220), the bar (226) having a surface contour (308) along which the roller (302) can be rolled during the transition of the stopping claw (220) from the separating position into the conveying position, the surface contour (308) and the slot (304) being configured to minimize the rolling friction forces that are exerted on the surface contour (308) by the roller (302) during the transition of the bar (226) from the separating position into the conveying position.

7. A separating device (110) according to any one of the preceding claims, furthermore comprising a delay unit, the delay unit being designed to temporally delay the lifting of the blockage of the stop (116) so as to allow the subsequent movement of the stop (116) out of the separating position into the conveying position.

8. The separating device (110) according to claim 7, wherein the delay unit is a braking roller (120) of the conveyor system (100).

9. A conveyor system (100) for conveying piece goods (108) in a conveying direction (102) on a conveying plane, the conveyor system (100) comprising a separating device (110) according to any one of the preceding claims.

## Revendications

1. Dispositif de séparation (110) pour système de transport (100) permettant le transport de marchandises unitaires (108) dans une direction de transport (102) sur un plan de transport, dans lequel
- le dispositif de séparation (110) comprend une butée (116) pour la marchandise unitaire (108) et un élément de commande (112),
- l'élément de commande (112) peut être mis en rotation autour d'un axe orienté parallèlement par rapport au plan de transport et perpendiculairement par rapport à la direction de transport (102) en raison d'un contact se produisant dans le plan de transport avec la marchandise unitaire (108),
- une mobilité de la butée (116) entre une position de séparation et une position de transport, ainsi qu'un blocage de la butée (116) dans la position de séparation, peuvent être commandées par l'élément de commande (112) en raison de la rotation,
- la butée (116) est rendue mobile par l'élément de commande (112) en raison de la rotation,
- l'élément de commande (112) est couplé mécaniquement avec la butée (116) par le biais d'une tige de traction (114), où la tige de traction (114) peut se déplacer dans la direction de transport (102) et inversement en raison de la rotation,
dans lequel la butée (116) comprend un crampon d'arrêt (220) et un verrou (226), où
- le crampon d'arrêt (220) peut être mis en rotation autour d'un axe (306) orienté parallèlement par rapport au plan de transport et perpendiculairement par rapport à la direction de transport (102) et pénètre à l'intérieur du chemin de parcours de la marchandise unitaire (108), au-delà du plan de transport, dans la position de séparation,
- le verrou (226) peut être mis en rotation autour d'un axe (300) orienté parallèlement par rapport au plan de transport et perpendiculairement par rapport à la direction de transport (102) et bloque, dans la position de séparation, une rotation du crampon d'arrêt (220) dans la position de transport,
**caractérisé en ce que**
- l'élément de commande (112) est disposé exclusivement de manière perpendiculaire à l'intérieur et en-dessous du plan de transport, vu à partir de la direction de la marchandise unitaire (108),
- la tige de traction (114) est conçue pour, lors de la transition de sa position de libération vers sa position de blocage, contourner le verrou (226) et de se tourner ainsi dans la position de séparation,
- la tige de traction (114) présente une déclivité (222) à son extrémité orientée vers le verrou (226), où la déclivité (222) est conçue pour que, lors du contournement du verrou (226), le verrou (226) est mis en rotation autour de son axe vers le haut en direction de la marchandise unitaire (108), pour, dans cette position, bloquer un pivotement en retour du crampon d'arrêt (220) se trouvant dans la position de séparation,
- la tige de traction (114) est conçue de sorte que, lorsque la tige de traction (114) se trouve par contre dans la position de libération, le verrou (226) peut de nouveau se mettre en rotation autour de son axe, ce par quoi le blocage du crampon d'arrêt est levé.

2. Dispositif de séparation (110) selon la revendication 1, dans lequel l'élément de commande (112)
- comprend un rouleau de transport (120) du système de transport (100), où le rouleau de transport (120) peut être mis en rotation autour de l'axe du rouleau de transport (120) orienté parallèlement par rapport au plan de transport et perpendiculairement par rapport à la direction de transport (102) en raison du contact se produisant dans le plan de transport avec la marchandise unitaire (108), et/ou
- comprend une bande transporteuse, où la bande transporteuse est logée sur un rouleau de guidage, où la bande transporteuse peut être mise en rotation autour de l'axe du rouleau de guidage orienté parallèlement par rapport au plan de transport et perpendiculairement par rapport à la direction de transport (102) en raison du contact de la bande transporteuse se produisant dans le plan de transport avec la marchandise unitaire (108).

3. Dispositif de séparation (110) selon la revendication 1, doté en outre d'un accumulateur d'énergie (206), où l'accumulateur d'énergie (206) est disposé pour
- gagner de l'énergie lorsque l'élément de commande (112) est en rotation autour de l'axe en raison du contact avec la marchandise unitaire (108), et
- délivrer de l'énergie par le déplacement de la tige de traction (114) à l'état sans contact de l'élément de commande (112) avec la marchandise unitaire (108) à partir d'une position de blocage vers une position de libération, où la mobilité de la butée (116) entre la position de séparation et la position de transport dans la position de libération est donnée et le blocage de la butée (116) est donné dans la position de blocage.

4. Dispositif de séparation (110) selon la revendication 1, dans lequel
- le verrou (226) est conçu pour adopter la position de transport du fait de la contrainte par la force de la gravité et/ou par la force d'un élément élastique dans la position de libération de la tige de traction (114), et/ou
- le crampon d'arrêt (220) est conçu pour adopter la position de séparation du fait de la contrainte par la force de la gravité et/ou par la force d'un élément élastique dans la position de libération de la tige de traction (114).

5. Dispositif de séparation (110) selon la revendication 1 ou la revendication 4, dans lequel le crampon d'arrêt (220) présente un rouleau (302) tournant librement, où le crampon d'arrêt (220) est adjacent au niveau du verrou (226) exclusivement par le biais du rouleau (302).

6. Dispositif de séparation (110) selon la revendication 5, dans lequel le rouleau (302) est logé dans une coulisse (304) du crampon d'arrêt (220), où le verrou (226) présente une structure de surface (308), le long de laquelle le rouleau (302) peut se dérouler vers la position de transport lors de la transition de la position de séparation vers la position de transport, où le contour de la surface (308) et la coulisse (304) sont moulés pour minimiser les forces de friction en rotation exercées par le rouleau (302) sur le contour de la surface (308) lors de la transition du verrou (226) de la position de séparation vers la position de transport.

7. Dispositif de séparation (110) selon l'une des revendications précédentes, doté en outre d'une unité de retard, où l'unité de retard est conçue pour retarder dans le temps la levée du blocage de la butée (116) afin de permettre le déplacement ultérieur de la butée (116) de la position de séparation vers la position de transport.

8. Dispositif de séparation (110) selon la revendication 7, dans lequel l'unité de retard comprend un rouleau de freinage (120) du système de transport (100).

9. Système de transport (100) pour le transport de marchandise unitaire (108) dans une direction de transport (102) sur un plan de transport, où le système de transport (100) comprend un dispositif de séparation(110) selon l'une des revendications précédentes.
